# EUROPEAN PATENT SPECIFICATION

(11) **EP 1 038 174 B1**
(45) Date of publication and mention of the grant of the patent: **07.04.2004**
(21) Application number: 97950499.0
(22) Date of filing: 17.12.1997
(51) Int. Cl.: G01N 29/04, F16C 19/52

(54) **ULTRASONIC IN-SITU INSPECTION FOR SLEWING BEARINGS**
IN-SITU-ULTRASCHALLPRÜFUNG FÜR DREHLAGER
CONTROLE PAR ULTRASONS IN SITU POUR PALIERS ORIENTABLES

(43) Date of publication of application: 27.09.2000
(73) Proprietor: SKF Engineering & Research Centre B.V., 3430 DT Nieuwegein (NL)
(72) Inventor: HANDS, Godfrey, Attleborough, Nuneaton CV11 6RY (GB); BOURGEOIS-JACQUET, Pierre, F-89200 Avallon (FR)
(74) Representative: van Westenbrugge, Andries
(86) International application number: PCT/NL1997/000704
(87) International publication number: WO 1999/031500

(56) References cited:
- EP-A- 0 139 317
- EP-A- 0 228 731
- EP-A- 0 413 119
- DE-A- 3 941 267
- P.H.JOHNSTON: "NDE of space shuttle solid rocket motor field joint." IEEE 1987 ULTRASONICS SYMPOSIUM PROCEEDINGS, vol. 2, 14 - 16 October 1987, DENVER COLORADO, USA, pages 1087-1091, XP002071871

## Description

The invention is related to a method for inspecting a bearing comprising two opposite rings, at least one row of rolling elements which are in rolling contact with the raceways of said rings, at least one of said rings having a cross-sectional shape with at least one boundary contour having at least a curved portion, and at least one ultrasonic scanning device carried by one of the rings for scanning a specific area of the other ring upon relative rotation of the rings, wherein the ultrasonic scanning device is oriented in such a way that the ultrasonic waves emitted thereby, upon encountering a defect in said area, are at least partly reflected for detection by the scanning device. In particular, the invention is related to the field of inspection of bearings, in particular the in-situ inspection for slewing bearings.

Bearings such as a slewing bearing or a pivot bearing are operated in harsh environmental conditions, and subjected to intensive loadings. The bearings in question are often used in offshore crane applications, which are exposed to extreme weather conditions and extreme shock or peak loadings. Other applications, such as in heavy earth moving equipment, are conceivable as well

As a result of these conditions, it is required to inspect the slewing bearing frequently. These inspections are aimed at the early detection of defects, such as raceway pitting or cracks in highly loaded areas. Thereby, sudden premature failure is to be avoided.

Frequently, the problem arises thereby that the slewing bearings in question are hardly or not accessible. They are situated in a cumbersome place, such as on top of a pedestal, and are covered by the crane structure on top.

A solution to this problem has been proposed in EP-B.228731. In that case. one of the rings of the slewing bearing has been equipped with an ultrasonic probe, which upon relative rotation of the rings scans critical areas in the other ring. Thereby, surface defects, cracks, etc. in specific highly loaded areas can be detected in-situ. This brings the important advantage that bearing inspection can be carried out without dismantling the entire arrangement in which the bearing is installed.

Said slewing bearing has highly loaded areas on both sides of a nose, which nose has three raceways for a corresponding number of rows of rollers.

Furthermore, in Dutch patent application 1005088, which is not an earlier published application, ultrasonic probes are applied for scanning specific areas, e.g. the raceway, of a slewing ring having a series of balls.

Although both approaches offers satisfying results, it still appears to be difficult to scan for areas which are more or less shielded with respect to the ultrasonic waves. This shielding effect may for instance occur in the ball bearing mentioned before. The ultrasonic probes are arranged somewhat sideways of the raceway, and cannot scan for the deepest or lowest area of the raceway.

Likewise, dependent on the position and orientation of the ultrasonic probes in the slewing bearing according to EP-B-228731, specific areas, e.g. in the shoulder of the nose, are difficult to scan for.

The object of the invention is therefore to provide a solution for this problem, allowing the inspection of all relevant, critically loaded areas of a bearing. This object is achieved by means of the method defined in claim 1. The ultrasonic scanning device is situated at a surface portion at a distance from said at least one boundary contour, for allowing an ultrasonic wave beam which spreads out like a cone to impinge on said boundary contour such that specific ultrasonic waves impinge according to an angle of about 67, 7° with respect to the normal line on said boundary contour so as to form surface waves following at least said curved portion of said curved boundary contour.

The approach of scanning of specific bearing areas according to the invention relies on the insight that not only longitudinal or transverse ultrasonic waves can be used to achieve said goal. but also surface waves or Rayleigh waves.

Such surface waves propagate in solid materials along the bounding surface thereof. They are constrained to lie near such surface, and hence propagate in only two dimensions. Away from the boundary surface into the interior of the body. such waves are quickly damped out. As a yardstick, generally the decay is complete at a depth of about a single wavelength.

It should furthermore be observed that the three different modes of propagation of an ultrasound wave in solid material have different velocities. When the incidence angle of the ultrasound wave is not normal, refraction or reflection occurs, as well as conversion from one propagation mode to the other.

According to the invention, by allowing an ultrasonic wave to impinge upon a surface of the bearing ring in question at a not perpendicular incidence angle, controlled angles and propagation modes are generated. Because an ultrasound wave beam generally is not fully parallel, but spreads out somewhat like a cone, transverse waves will impinge on a surface at many different angles. At a specific angle of about 67,7°, transverse waves in steel material are partly converted in surface waves. Such surface waves follow the contours of the surface in question. even around corners and radii and hence are able to scan areas which where hitherto thought to be impossible to reach due to shielding effects.

The surface waves are eventually reflected by surface defects. cracks, etc. whereby they are returned along the same path that they arrived along. Once the point is reached where the original surface wave was generated by the incident transverse wave, the reflected surface waye is converted back into a reflected transverse wave. Said reflected transverse wave can subsequently be detected by the ultrasonic probe, as an indication of the surface defect in question.

Subsequently, the invention will be described further with reference to the embodiments shown in the figures.

Figure 1 shows a four-point contact ball slewing bearing.

Figures 2a, b show a detail of figure 1.

Figure 3a, b show a corresponding detail of a three row roller bearing.

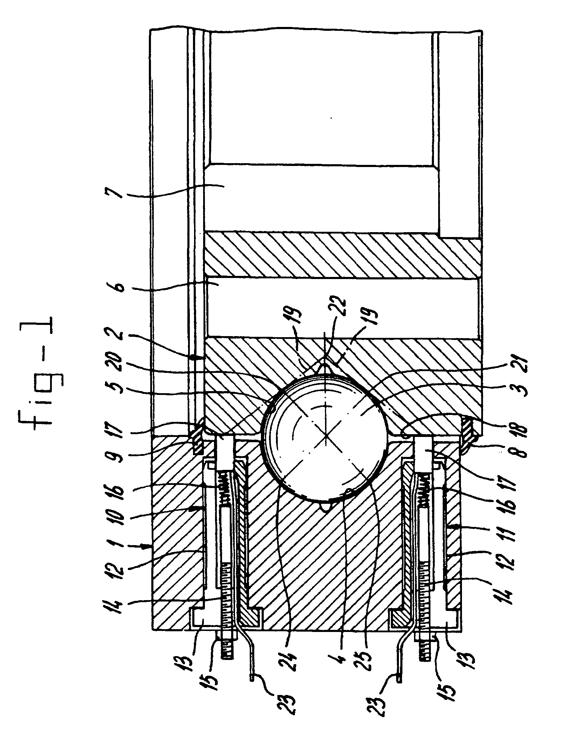

Figure 1 shows a four-point contact ball slewing bearing having an outer ring 1, an inner ring 2 and a series of balls 3 supporting these rings 1 and 2 mutually. The balls 3 are contained in the raceway 4 of the outer ring and in the raceway 5 of the inner ring.

In service, the outer ring 1 is connected to a supporting structure, such as the pedestal of a crane. Onto the inner ring 2, the crane structure itself is mounted. To that end, holes 6 are provided in the inner ring which may accommodate mounting bolts. Also, the inner ring on its inner circumference is provided with a tooth rack 7, which can cooperate with a pinion for rotating the crane structure.

As is common practice, seals 8. 9 have been provided in order to seal the bearing space between the rings 1, 2.

According to the invention, two ultrasonic scanning devices 10, 11 have been inserted in radial holes 12 in the outer ring. The devices 10, 11 comprise a housing 13. a shaft 14, as well as a means 15 for fixing the shaft 14 in a certain position within housing 13. The other end of the shaft 14 is supplied with a means for pressing the ultrasonic scanning probes 17 against the outer circumference 18 of the inner ring 2 or inner circumference of the outer ring 1.

The devices 10, 11 have been directed in such a way, that the path of the ultrasonic waves emitted thereby is oblique, as indicated by lines 19. These paths of the ultrasonic waves impinge upon the raceway 5 of the inner ring 2. In particular, they impinge upon the points 20, 21. which are the most highly loaded areas of a four-point ball bearing.

By means of the ultrasonic probes 17, it is therefore possible to obtain a very accurate assessment of the area of the raceway 5, and of the underlying structure of the inner ring 2 which is subjected to the highest stresses.

The path 19 of the ultrasonic waves intersect each other at a spot 22 lying beyond the raceway 5. Thereby, also this rather highly loaded area can be scanned accurately.

Although the figure shows two devices 10,11 which are able the scan the inner ring. It is of course also possible to insert ultrasonic devices in the inner ring for detection of corresponding areas in the outer ring.

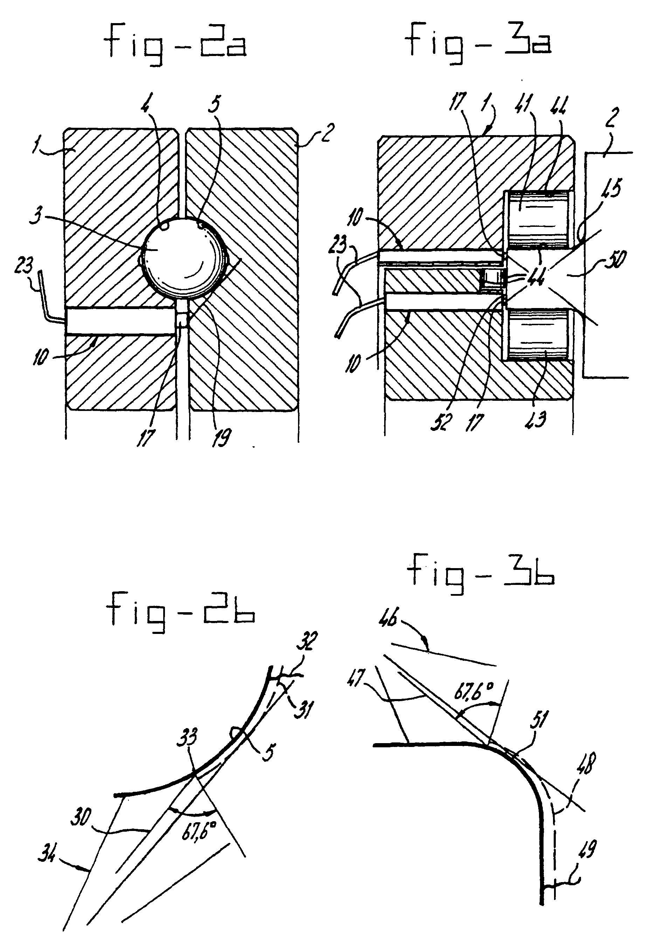

As shown in figure 2a, b, the ultrasonic wave 19 emitted by the devices 10, 11 is in the form of a cone-shaped bundle 34. Said cone-shaped bundle hits the raceway surface 5 at various angles. In particular, part 30 of said cone bundle hits the raceway surface 5 at an angle of about 67,6° with respect to the normal line on said surface, whereby the transverse waves, emitted by the ultrasonic scanning device 17, are converted into surface waves 31 at spot 33.

Said surface waves 31 are confined to the boundary of the curved raceway surface 5, and thereby to the cross-sectional contour thereof. While following said contour, the surface wave 31 will reach a surface crack 32 which is shielded with respect to the transverse waves which travel along a straight path. As a result, said surface wave is reflected.

Subsequently, the reflected surface waves travel back to the spot 33 where they were generated, as a result of the transverse waves impinging at the proper angle of 67,6. At the spot 33 in question, the surface waves are converted back into transverse waves, Which finally travel back over the same path along which they arrived. Subsequently, the thus reflected transverse waves are detected by the ultrasonic scanning device 17, which is thereby able to establish the presence of the crack 32.

The embodiment of figures 3a, b is a three-row roller bearing. ocmprising an outer ring 1, an inner ring 2 having a nose 50, and rows of rollers 41. 42 and 43 which engage the raceways 44.

In the outer ring 1, two ultrasonic scanning devices 10, 11 carrying ultrasonic probes 17 have been inserted. The probes 17 each emit a cone-shaped bundle 46 of ultrasonic waves, part of which hits the raceway 44 or the neighouring surface thereof, at an angle of about 67.6°. The transverse ultrasonic waves 47 in question are thereby converted in surface waves 48 which follow the curved boundary contour 51 of the area in question. Thus, in a way analogous to figures 2a, b, the crack 49 is detected.

Although in the description, reference is made to the embodiment shown, the outer ring of which is connected to a supporting structure, an alternative embodiment with the inner ring connected to the supporting structure is also possible. In that case, the tooth rack will be located on the outer circumference of the outer ring. It is also possible that the tooth rack can be located on the non-rotating ring.

## Claims

1. Method for inspecting a bearing comprising two opposite rings (1, 2), at least one row of rolling elements (33, 41, 42, 43) which are in rolling contact with the raceways (4, 5, 44) of said rings (1, 2), at least one of said rings (1, 2) having a cross-sectional shape with at least one boundary contour (5, 51) having at least a curved portion, and at least one ultrasonic scanning device (17) carried by one of the rings (1, 2) for scanning a specific area of the other ring (1, 2) upon relative rotation of the rings (1, 2), wherein the ultrasonic scanning device (17) is oriented in such a way that the ultrasonic waves (34, 46) emitted thereby, upon encountering a defect (32, 49) in said area, are at least partly reflected for detection by the scanning device (17), **characterized by** positioning the ultrasonic scanning device (17) at a surface portion (18, 52) at a distance from said at least one boundary contour (5, 51), for allowing an ultrasonic wave beam which spreads out like a cone to impinge on said boundary contour (5, 5 1) such that specific ultrasonic waves impinge according to an angle of about 67, 7° with respect to the normal line on said boundary contour (5, 51) so as to form surface waves (31, 48) following at least said curved portion of said curved boundary contour (5, 51).

## Patentansprüche

1. Verfahren zum Prüfen bzw. Inspizieren eines Lagers, umfassend zwei gegenüberliegende Ringe (1, 2), wenigstens eine Reihe von rollenden bzw. Rollelementen (33, 41, 42, 43), welche in Roll- bzw. Wälzkontakt mit den Kugelfagerringen bzw. Laufringen (4, 5, 44) der Ringe (1, 2) sind, wobei wenigstens einer der Ringe (1, 2) eine Querschnittsform mit wenigstens einer Grenzkontur (5, 51) aufweist, die wenigstens einen gekrümmten Abschnitt aufweist, und wenigstens eine Ultraschallabtastvorrichtung (17), die durch einen der Ringe (1, 2) zum Abtasten eines spezifischen Bereichs des anderen Rings (1, 2) bei einer Relativrotation der Ringe (1, 2) getragen wird, worin die Ultraschallabtastvorrichtung (17) in einer derartigen Weise ausgerichtet wird, daß die Ultraschallwellen (34, 46), die dadurch emittiert werden, beim Feststellen bzw. Antreffen eines Defekts (32, 49) in diesem Bereich wenigstens teilweise für eine Detektion durch die Abtastvorrichtung (17) reflektiert werden, **gekennzeichnet durch** Positionieren der Ultraschafiabtastvorrichtung (17) an einem Oberflächenabschnitt (18, 52) in einem Abstand von der wenigstens einen Grenzkontur (5, 51), um es einem Ultraschallwellenstrahl zu ermöglichen, welcher sich wie ein Konus bzw. Kegel ausbreitet, auf die Grenzkontur (5, 51) derart aufzutreffen, daß spezifische Ultraschallwellen gemäß einem Winkel von etwa 67,7° in bezug auf die Normale bzw. Senkrechte auf der Grenzkontur (5, 51) so auftreffen, um Oberflächenwellen (31, 48) auszubilden, die wenigstens dem gekrümmten Abschnitt der gekrümmten Grenzkontur (5, 51) folgen.

## Revendications

1. Procédé d'inspection d'un palier, comprenant deux bagues opposées (1, 2), au moins une série d'éléments de roulement (33, 41, 42, 43) qui sont en contact par roulement avec les chemins de roulement (4, 5, 44) desdites bagues (1, 2), au moins l'une desdites bagues (1, 2) ayant une forme en coupe transversale présentant au moins un contour de délimitation (5, 51) ayant au moins une partie incurvée, et au moins un dispositif de balayage à ultrasons (17) supporté par l'une des bagues (1, 2) pour balayer une zone spécifique de l'autre bague (1, 2) lors de la rotation relative des bagues (1, 2), dans lequel le dispositif de balayage à ultrasons (17) est orienté de telle sorte que les ondes ultrasonores (34, 46) émises par celui-ci, lorsqu'elles rencontrent un défaut (32, 49) dans ladite zone, sont au moins en partie réfléchies à des fins de détection par le dispositif de balayage (17),
**caractérisé en ce qu'**on positionne le dispositif de balayage à ultrasons (17) au niveau d'une partie superficielle (18, 52) à une certaine distance dudit au moins un contour de délimitation (5, 51) pour permettre à un faisceau d'ondes ultrasonores, s'étendant comme un cône, de tomber sur ledit contour de délimitation (5, 51) de telle sorte que les ondes ultrasonores spécifiques tombent en formant un angle d'environ 67,7° par rapport à l'axe standard sur ledit contour de délimitation (5, 51) de manière à former des ondes de surface (31, 48) suivant au moins ladite partie incurvée dudit contour de délimitation incurvé (5, 51).
